(19) Europäisches Patentamt
European Patent Office
Office européen des brevets

(11) EP 3 947 487 B1

(12) **EUROPEAN PATENT SPECIFICATION**

(45) Date of publication and mention of the grant of the patent:
**19.03.2025 Bulletin 2025/12**

(21) Application number: **20719789.8**

(22) Date of filing: **13.03.2020**

(51) International Patent Classification (IPC):
***C08F 220/18*** *(2006.01)* ***C08J 5/18*** *(2006.01)*
***C08L 51/00*** *(2006.01)*

(52) Cooperative Patent Classification (CPC):
(C-Sets available)
**C08F 220/14; C08J 5/18; C08L 51/003;**
C08J 2333/12; C08L 2203/16; C08L 2207/53
(Cont.)

(86) International application number:
**PCT/US2020/022536**

(87) International publication number:
**WO 2020/197797 (01.10.2020 Gazette 2020/40)**

(54) **HIGHLY PROCESSABLE FLEXIBLE ACRYLIC RESIN**

HOCHGRADIG VERARBEITBARES FLEXIBLES ACRYLHARZ

RÉSINE ACRYLIQUE SOUPLE HAUTEMENT TRANSFORMABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2019 US 201962825476 P**

(43) Date of publication of application:
**09.02.2022 Bulletin 2022/06**

(73) Proprietor: **Rohm and Haas Company**
**Collegeville, PA 19426 (US)**

(72) Inventors:
- **GUO, Hailan**
**Collegeville, Pennsylvania 19426 (US)**
- **WILLS, Morris**
**Collegeville, Pennsylvania 19426 (US)**
- **YOUNG, Wen-Shiue**
**Collegeville, Pennsylvania 19426 (US)**

(74) Representative: **Beck Greener LLP**
**Fulwood House**
**12 Fulwood Place**
**London WC1V 6HR (GB)**

(56) References cited:
**EP-A1- 1 582 538**
**EP-A2- 1 350 812**
**WO-A1-2014/035608**
**WO-A1-2016/064823**
**WO-A1-2019/018219**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/14, C08F 220/1804, C08F 222/102;**
**C08L 51/003, C08L 33/12**

**Description**

FIELD OF THE INVENTION

The field of this invention is flexible acrylic resin compositions and films made from such compositions.

BACKGROUND

A variety of indoor and outdoor products benefit from use of flexible, transparent and weather resistant plastic materials. Fluorine containing polymers and thermoplastic polyurethanes provide those characteristics but are too expensive for many end uses. Lower cost resins such as polyvinylchloride with plasticizer or polyethylene resins may not meet all performance requirements. Certain of these polymers may have undesirable environmental impact.

Various acrylic resins have also been proposed. However, many are too rigid for certain end uses, possess high moduli or poor tear resistance. One commercial acrylic resin contains block copolymers of poly(methylmethacyrylate) and poly(butylacrylate) produced by anionic polymerization. While these resins are flexible and have whitening resistance, they are prohibitively expensive for certain applications. Multi-stage acrylic polymers have been taught as an alternative (See, e.g., U.S. Patent No. 10,040,915). These materials tend to be highly viscous (Melt flow index or rates in the range of 10 g/10 minutes at 220°C, 10 kg) which makes processing challenging in certain applications.

SUMMARY OF THE INVENTION

Disclosed herein is a composition comprising a multi-stage flexible acrylic resin and a branched polymer which is a reaction product of reactants comprising one or more monoethylenically unsaturated ester monomers, a chain transfer agent in an amount of 0.1 to 10 weight percent, and a crosslinker in an amount of 0.1 to 10 weight percent of a crosslinker, wherein weight percent is based on total amount of reactants, provided the amount of crosslinker in moles is not greater than the amount of chain transfer agent in moles; wherein said branched polymer is characterized by a polymer branching ratio, g', of less than 1; and wherein $g' = \left(\frac{[\eta]_{branched}}{[\eta]_{linear}}\right)_M$ measured by gel permeation chromatography with online multi-angle light scattering (MALS) detector, viscometer (VS), and differential refractive index (dRI) detector. In some embodiments, the branched polymer is not cross-linked.

Also disclosed herein is an extruded film comprising a layer of the above composition, wherein the layer is no greater than 150 microns, is transparent and does not show crease whitening.

DETAILED DESCRIPTION OF THE INVENTION

Disclosed herein is a composition comprising a multi-stage flexible acrylic resin and a branched polymer. The inventors have found that the viscosity of the multi-stage flexible acrylic resin is too high to allow the resin to be used in certain applications, such as when there is a desire to extrude very thin films or in certain injection molding applications. Increasing processing temperature can cause the resin to degrade. Addition of low molecular weight linear additives can lower the viscosity (increase the melt flow index) but the inventors found that the resulting products in some instances showed crease whitening which can be indicative of phase separation in the mixture. Surprisingly, the inventors have found that the branched polymers as disclosed lower the viscosity without showing undesirable crease whitening. In addition, compositions having the branched polymers additives can show improved tensile properties and broader processing windows as compared to similar compositions having a linear additive.

According to certain embodiments, the multi-stage flexible acrylic resin comprises a multi-stage sequential polymer composition comprising a first stage crosslinked acrylic polymer composition which forms a core, one or more intermediate layer acrylic polymer compositions, and an outer layer acrylic polymer composition wherein the core and the intermediate layer(s) and outer layer differ in one or more of the following respects: being derived from different acrylate monomers, degree of cross linking (intermediate and outer layers may or may not be cross linked), and glass transition temperature. The acrylic polymer compositions are formed from reaction mixtures comprising one or more hydrocarbyl acrylates or hydrocarbyl methacrylates, optional cross linkers (except some cross linker is required for core), optional chain transfer agents. According to certain embodiments the multi-stage flexible acrylic resin comprises a first stage which is the reaction product of one or more monomers selected from the group consisting of alkyl acrylates and alkyl methacrylates with one or more crosslinking monomers, graft-linking monomers or combinations thereof. According to certain embodiments the amount of units derived from the alkyl acrylate and/or alkyl methacrylate monomers is in the range of 95 to 99.9 weight percent of the first stage and the amount of units derived from the cross-linking monomer and/or graft linking monomers is 0.1 to 5 weight percent. According to certain embodiments this first stage is cross-linked with a Tg

in the range of -85 to -10 °C. The first stage is sometimes referred to as the core. The resin comprises one or more intermediate stage layers. Each of the intermediate layers comprises from 93 to 100 weight percent of units derived from a one or more monomers selected from the group consisting of alkyl acrylates and alkyl methacrylates, from 0 to 5 weight percent of units derived from a cross-linking monomer, a graft-linking monomer, or a combination thereof, optionally from 0 to 2.0 weight percent units derived from one or more chain transfer agents; wherein there is a compositional gradient between the intermediate layers such that the Tg transitions from - 30°C to 70°C over the width of the intermediate region. The resin further includes an outer stage or an outermost layer which comprises from 98.5 to 100 weight percent units derived from one or more monomers selected from the group consisting of alkyl acrylate, alkyl methacrylate, and styrenic monomers, and combinations thereof, from 0 to 1.5 weight percent units derived from one or more chain transfer agents, and has a Tg of from 40 °C to 110 °C.

The crosslinked core comprises greater than 95 to 99.9 weight percent of units derived from one or more monomers selected from the group consisting of alkyl acrylate or alkyl methacrylate monomers. All individual values and subranges from 95 to 99.9 weight percent are included herein and disclosed herein; for example, the amount of units derived from one or more alkyl acrylate or alkyl methacrylate monomers can be from a lower limit of 95, 95.5, 96, 96,5, 97, 975, 98, 98.5, 99, or 99.5 weight percent to an upper limit of 95.3, 95.8, 96.3, 96.9, 97.5, 98, 98.7, 99.4 or 99.9 weight percent. For example, the amount of units derived from one or more alkyl acrylate or alkyl methacrylate monomers may be in the range of from 95 to 99.9 weight percent, or in the alternative, the amount of units derived from one or more alkyl acrylate or alkyl methacrylate monomers may be in the range of from 95 to 97.5 weight percent, or in the alternative, amount of units derived from one or more alkyl acrylate or alkyl methacrylate monomers may be in the range of from 97.8 to 99.9 weight percent, or in the alternative, the amount of units derived from one or more alkyl acrylate or alkyl methacrylate monomers may be in the range of from 96.5 to 97.9 weight percent.

The crosslinked core comprises from 0.1 to 5 weight percent of units derived from a cross-linking monomer, graft-linking monomer, or combination thereof. All individual values and subranges from 0.1 to 5 weight percent are included herein and disclosed herein; for example, the amount of units derived from cross-linking monomer, graft-linking monomer, or combination thereof can be from a lower limit of 0.1, 0.7, 1.2, 1.9, 2.6, 3.1, 3.7, 4.4, or 4.9 weight percent, to an upper limit of 0.2, 0.8, 1.4, 2.1, 2.7, 3.3, 3.8, 4.5 or 5 weight percent. For example, the amount of units derived from cross-linking monomer, graft-linking monomer, or combination thereof may be in the range of from 0.1 to 5 weight percent, or in the alternative, the amount of units derived from cross-linking monomer, graft-linking monomer, or combination thereof may be in the range of from 0.5 to 2.5 weight percent, or in the alternative, the amount of units derived from cross-linking monomer, graft-linking monomer, or combination thereof may be in the range of from 1.0 to 4.0 weight percent, or in the alternative, the amount of units derived from cross-linking monomer, graft-linking monomer, or combination thereof may be in the range of from 0.3 to 3.5 weight percent.

The crosslinked core has a Tg of from -85 to -10 °C. All individual values and subranges from -70 to -10 °C are included herein and disclosed herein; for example, the Tg of the crosslinked core can be from a lower limit of -85, -80 -70, -60, -50, -40, -30, -20, or -15 °C to an upper limit of -75, -65, -55, -45, -35, -25, -17 or -10 °C. For example, the Tg of the crosslinked core may be in the range of from -85 to -10 °C, or in the alternative, the Tg of the crosslinked core may be in the range of from -60 to -40 °C, or in the alternative, the Tg of the crosslinked core may be in the range of from -70 to -50 °C, or in the alternative, the Tg of the crosslinked core may be in the range of from -50 to -30 °C.

The intermediate region comprises one or more intermediate layers. All individual values and subranges from one or more intermediate layers are disclosed herein and included herein. For example, the intermediate region may comprise one, two, three, four, or five intermediate layers.

Each of the intermediate layers comprises up to 100 weight percent of units derived from a one or more monomers selected from the group consisting of alkyl acrylate or alkyl methacrylate monomers. All individual values and subranges up to 100 weight percent are included herein and disclosed herein; for example, the amount of units derived from one or more alkyl (meth)acrylate monomers can be from a lower limit of 88.5, 89.4, 90.7, 91.8, 92.6, 93.7, 94, 94.9, 95.5, 96, 97.4, 98.1, 99.3, 99.9 or 100 weight percent. For example, the amount of units derived from one or more alkyl acrylate or alkyl methacrylate monomers may be in the range of from 88.5 to 100 weight percent, or in the alternative, the amount of units derived from one or more alkyl acrylate or alkyl methacrylate monomers may be in the range of from 90.5 to 99.9 weight percent, or in the alternative, the amount of units derived from one or more alkyl acrylate or alkyl methacrylate monomers may be in the range of from 88.5 to 94.9 weight percent, or in the alternative, the amount of units derived from one or more alkyl acrylate or alkyl methacrylate monomers may be in the range of from 92.5 to 96 weight percent.

Each of the intermediate layers comprises from 0 to 5 weight percent of units derived from a cross-linking monomer, a graft-linking monomer, or a combination of two or more thereof. All individual values and subranges are disclosed herein and included herein; for example, the amount of units derived from a cross-linking monomer, a graft-linking monomer, or a combination thereof may be from a lower limit of 0, 0.5, 1, 1.5, 2, 2.5, 3, 3.5, 4, or 4.5 weight percent to an upper limit of 0.2, 0.7, 1.2, 1.7, 2.5, 2.7, 3.2, 3.7, 4.2, 4.7, or 5 weight percent. For example, the amount of units derived from a cross-linking monomer, a graft-linking monomer, or a combination of two or more thereof may be in the range of from 0 to 5 weight percent, or in the alternative, the amount of units derived from a cross-linking monomer, a graft-linking

monomer, or a combination of two or more thereof may be in the range of from 0 to 2.5 weight percent, or in the alternative, the amount of units derived from a cross-linking monomer, a graft-linking monomer, or a combination of two or more thereof may be in the range of from 2.5 to 5 weight percent, or in the alternative, the amount of units derived from a cross-linking monomer, a graft-linking monomer, or a combination of two or more thereof may be in the range of from 2 to 4 weight percent.

Each of the intermediate layers optionally comprises from 0 to 2.0 weight percent units derived from one or more chain transfer agents. All individual values and subranges from 0 to 2.0 weight percent are included herein and disclosed herein; for example, the amount of units derived from one or more chain transfer agents can be from a lower limit of 0, 0.2, 0.4, 0.6, 0.8, 1.0, 1.2, 1.4, 1.6, 1.8, or 2.0 weight percent to an upper limit of 0.1, 0.3, 0.5, 0.7, 0.9, 1.1, 1.3, 1.7, or 1.9 weight percent. For example, the amount of units derived from one or more chain transfer agents may be in the range of from 0 to 2.0 weight percent, or in the alternative, the amount of units derived from one or more chain transfer agents may be in the range of from 0.75 to 2.0 weight percent, or in the alternative, the amount of units derived from one or more chain transfer agents may be in the range of from 0 to 0.75 weight percent, or in the alternative, the amount of units derived from one or more chain transfer agents may be in the range of from 0.5 to 1.0 weight percent.

There is a compositional gradient between the intermediate layers such that the Tg transitions from -30°C to 70°C over the width of the intermediate region. All individual values and subranges from -30°C to 70°C are included herein and disclosed herein; for example, the Tg can transition from a lower limit of -30, -20, -10, 0, 10, 20, 30, 40 ,50, or 60 °C to an upper limit of -25, -15, -5, 5, 15, 45, or 70 °C. For example, the Tg can transition over the range of from -30 to 70 °C, or in the alternative, the Tg can transition over the range of from -10 to 30 °C, or in the alternative, the Tg can transition over the range of from -30 to -15 °C, or in the alternative, or in the alternative, the Tg can transition over the range of from -25 to 0 °C, or in the alternative, the Tg can transition over the range of from 0 to 15 °C, or in the alternative, the Tg can transition over the range of from -15 to 55 °C, or in the alternative, the Tg can transition over the range of from 5 to 35 °C.

The outermost layer comprises from 98.5 to 100 weight percent units derived from one or more monomers selected from the group consisting of alkyl (meth)acrylate, styrenic monomers, and combinations of two or more thereof. All individual values and subranges from 98.5 to 100 weight percent are included herein and disclosed herein; for example, the amount of units derived from one or more monomers selected from the group consisting of alkyl (meth)acrylate, styrenic monomers, and combinations of two or more thereof can be from a lower limit of 98.5, 98.7, 98.9, 99.1, 99.3, 99.5, 99.7, or 99.9 weight percent to an upper limit of 98.6, 98.8, 99, 99.2, 99.4, 99.6, 99.8 or 100 weight percent. For example, the amount of units derived from one or more monomers selected from the group consisting of alkyl (meth)acrylate, styrenic monomers, and combinations of two or more thereof may be in the range of from 98.5 to 100 weight percent, or in the alternative, the amount of units derived from one or more monomers selected from the group consisting of alkyl (meth) acrylate, styrenic monomers, and combinations of two or more thereof may be in the range of from 98.5 to 100 weight percent, or in the alternative, the amount of units derived from one or more monomers selected from the group consisting of alkyl acrylates, alkyl methacrylates, and styrenic monomers, and combinations of two or more thereof may be in the range of from 98.5 to 100 weight percent, or in the alternative, the amount of units derived from one or more monomers selected from the group consisting of alkyl acrylates, alkyl methacrylates, styrenic monomers, and combinations of two or more thereof may be in the range of from 98.5 to 100 weight percent, or in the alternative, the amount of units derived from one or more monomers selected from the group consisting of alkyl (meth)acrylate, styrenic monomers, and combinations of two or more thereof may be in the range of from 98.5 to 99.6 weight percent, or in the alternative, the amount of units derived from one or more monomers selected from the group consisting of alkyl acrylates, alkyl methacrylates, styrenic monomers, and combinations of two or more thereof may be in the range of from 96.5 to 100 weight percent.

The outermost layer comprises from 0 to 1.5 weight percent units derived from one or more chain transfer agents. All individual values and subranges from 0 to 1.5 weight percent are included herein and disclosed herein; for example, the amount of units derived from one or more chain transfer agents can be from a lower limit of 0, 0.2, 0.4, 0.6, 0.8, 1, 1.2, or 1.4 weight percent to an upper limit of 0.1, 0.3, 0.5, 0.7, 0.9, 1.1, 1.3, or 1.5 weight percent. For example, the amount of units derived from one or more chain transfer agents may be in the range of from 0 to 1.5 weight percent, or in the alternative, the amount of units derived from one or more chain transfer agents may be in the range of from 0 to 0.75 weight percent, or in the alternative, the amount of units derived from one or more chain transfer agents may be in the range of from 0.75 to 1.5 weight percent, or in the alternative, the amount of units derived from one or more chain transfer agents may be in the range of from 0.3 to 1.2 weight percent.

The outermost layer has a Tg of from 40 °C to 110 °C. All individual values and subranges from 50 °C to 110 °C are included herein and disclosed herein; for example, the Tg of the outermost layer can be from a lower limit of 40, 43, 45, 50, 60, 70, 80, 90, or 100 °C to an upper limit of 55, 65,75, 85, 95, 105, or 110 °C. For example, the Tg of the outermost layer may be in the range of from 40 °C to 110 °C, or in the alternative, the Tg of the outermost layer may be in the range of from 45 °C to 80 °C, or in the alternative, the Tg of the outermost layer may be in the range of from 75 °C to 110 °C, or in the alternative, the Tg of the outermost layer may be in the range of from 65 °C to 95 °C.

For the above Tgs of copolymers may be calculated with the Fox equation [Bulletin of the American Physical Society 1 , 3 Page 123 (1956)] as follows:

$$\frac{1}{T_g} = \frac{w_1}{T_{g(1)}} + \frac{w_2}{T_{g(2)}}$$

For a copolymer, $w_1$ and $w_2$ refer to the weight fraction of the two comonomers, based on weight of monomers charged to the reaction vessel, and $T_{g(1)}$ and $T_{g(2)}$ refer to the glass transition temperatures of the two corresponding homopolymers in degrees Kelvin. For polymers containing three or more monomers, additional terms are added ($w_n/T_{g(n)}$). The glass transition temperatures of homopolymers for the purposes of this invention are those reported in "Polymer Handbook", edited by J. Brandrup and E. H. Immergut, Interscience Publishers, 1966, unless that publication does not report the Tg of a particular homopolymer, in which case the Tg of the homopolymer is measured by differential scanning colorimetry (DSC).

The alkyl of the alkyl acrylate or alkyl methacrylate may be a linear or branched alkyl group with 1 to 12 carbon atoms. Exemplary monomers include Exemplary useful alkyl groups include butyl acrylate, ethyl hexyl acrylate, ethyl acrylate, methyl methacrylate, butyl methacrylate, and iso-octylacrylate.

Examples of cross-linking and/or graft-linking monomers useful in the crosslinked core and intermediate layers include, for example, butanediol diacrylate, butanediol dimethacrylate, ethylene glycol diacrylate, ethylene glycol dimethacrylate, divinyl benzene, diethylene glycol diacrylate, diethylene glycol dimethacrylate, diallyl maleate, allyl methacrylate, diallyl phthalate, triallyl phthalate, trimethylolpropane triacrylate, trimethylolpropane trimethacrylate blends thereof and combinations of two or more thereof.

According to certain embodiments the composition comprises the multi-stage flexible acrylic resin in amounts of at least 15, 20, 30, 40, 50, 60, 70, 75, or 80 weight percent and no more than 95 or 90 weight percent based on total weight of the composition.

According to certain aspects the flexible acrylic resin may be blended with another polymer. Examples of such polymers include acrylate or acrylic polymers such as poly(methylmethacrylate), polyesters, polycarbonates, polyamides, and halogenated polyolefins having at least 20 or at least 40weight percent halogen, such as polyvinylchloride.

The branched polymer is a reaction product of reactants comprising one or more monoethylenically unsaturated ester monomers, a chain transfer agent in an amount of 0.1 to 10 weight percent, and a crosslinker in an amount of 0.1 to 10 weight percent of a crosslinker, wherein weight percent is based on total amount of reactants. In the claimed invention the moles of cross-linker is less than the moles of chain transfer agent. According to certain embodiments the weight percent of crosslinker is less than the weight percent of chain transfer agent. In some embodiments, the branched polymer is not cross-linked. To avoid cross-linking, the amount of cross-linker is not greater than the amount of chain transfer agent.

Suitable monoethylenically unsaturated ester monomers useful in making the branched polymer according to certain embodiments can have the structure R'-C(O)O-R where R is a hydrocarbyl group (e.g. alkyl group or aryl group) and R' is a monoethylenically unsaturated aliphatic group having at least 2 or 3 carbon atoms. According to certain embodiments R is an alkyl group of at least 1 or 2 or 3 carbon atoms. According to certain embodiments R is an alkyl group having no more than 12 or 10 or 8 or 6 or 5 carbon atoms. According to certain embodiments R is an aryl group of 6 to 12 carbon atoms. According to certain embodiments R' has no more than 6 carbon atoms. Examples of suitable monomers include butyl acrylate, ethyl hexyl acrylate, ethyl acrylate, methyl methacrylate, butyl methacrylate, cyclohexyl (meth) acrylate, cyclopentyl methacrylate, tetrahydrofurfyl methacrylate, and benzyl (meth)acrylate. Combinations of two or more such monoethylenically unsaturated ester monomer may be used. For example, a combination of methyl methacrylate and butyl methacrylate can be used. For example, the amount of methyl methacrylate can be at least 20, 30, 40, 50, 60, 70 or 80 weight percent of the reactants and can be for example less than 99.8, 99, 98, 97, 96, 95, 90, or 85 weight percent of the reactants. A second monoethylenically unsaturated ester monomer (e.g. butyl acrylate) can be 0 or greater than 0, 1, 2, 3, 4, or 5 weight percent of the reactants and less than 60, 50, 40, 30, 20, or 10 of the reactants. In certain embodiments, additional monoethylenically unsaturated ester monomers may be used. The combination of the second and additional monoethylenically unsaturated monomer(s) taken together in such embodiments is greater than 0, 1, 2, 3, 4, or 5 weight percent of the reactants and less than 60, 50, 40, 30, 20, or 10 of the reactants.

According to certain embodiments one or more additional monounsaturated addition-polymerizable (e.g. monoethylenically unsaturated) monomers may be included. For example, styrene or acrylonitrile could be added. The amount of such additional monounsaturated addition-polymerizable monomer is preferably less than 10 or 5 weight percent based on weight of the reactants.

The reactants further comprise a chain transfer agent (CTA). The chain transfer agent may be any compound known or found to be useful as a chain transfer agent in polymerization of acrylate or methacrylate monomers. For example, thiol chain transfer agents can be used. Examples of such thiol CTAs include monofunctional and polyfunctional thiols. Monofunctional thiols include, but are not limited to, propyl mercaptan, butyl mercaptan, hexyl mercaptan, octyl mercaptan, dodecyl mercaptan, thioglycolic acid, mercaptopropionic acid, alkyl thioglycollates, e.g. 2-ethyl hexyl thioglycollate or octylthioglycollate, mercaptoethanol, mercaptoundecanoic acid, thiolactic acid, and thiobutyric acid. Polyfunctional thiols include trifunctional compounds such as trimethylol propane tris(3-mercaptopropionate), tetrafunctional compounds such as pentaerythritol tetra(3-mercaptopropionate), pentaerythritol tetrathioglycollate, pentaerythritol tetrathiolactate, pentaerythritol tetrathiobutyrate; hexafunctional compounds such as dipentaerythritol hexa(3-mercaptopropionate), dipentaerythritol hexathioglycollate; octafunctional thiols such as tripentaerythritol octa(3-mercaptopropionate), and tripentaerythritol octathioglycollate. The use of polyfunctional thiols is a useful way to increase the degree of branching in the polymer. Optionally, the chain transfer agent may comprise a mixture of more than one type of compound. According to one embodiment, the CTA is

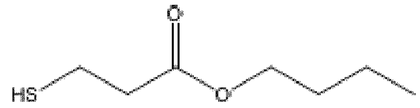

butyl 3-mercaptopropionate (BMP) .

Alternative chain transfer agents may be any species known to reduce molecular weight in the conventional free-radical polymerization of vinyl monomers. Examples include sulphides, disulphides, halogen-containing species. Also, catalytic chain transfer agents such as cobalt complexes, e.g. cobalt (II) chelates such as cobalt porphyrin compounds are useful chain transfer agents for the invention. Suitable cobalt chelates are known in the art and are described in WO 98/04603. A particularly suitable compound is bis(borondifluorodimethylglyoximate) cobaltate (II) also known as CoBF. Catalytic chain transfer agents may be used in relatively low concentrations compared to conventional thiol chain transfer agents, e.g. <0.5%, preferably < 0.1% by weight (on monofunctional monomer), since they are generally highly effective at low concentrations. We have surprisingly found that catalytic chain transfer compounds based on cobalt complexes may be very effectively used at concentrations of less than 0.05% by weight (500 ppmw), e.g. 0.0001-0.01% by weight (1-100 ppmw) based on monofunctional monomer in the polymerization process of the present invention to give soluble branched polymers.

The amount of chain transfer agent is at least 0.1 or 0.5 or 1 weight percent based on total weight of the reactants. According to some embodiments the amount of chain transfer agent is no more than 10 or 8 or 6 or 5 weight percent based on total weight of the reactants.

The reactants further comprise a cross-linker. Inclusion of the cross-linker provides the branching. However, the amount of cross-linker must be controlled so that the polymer does not cross-link. According to an embodiment the amount of crosslinker is no more than the amount of chain transfer agent. According to an embodiment, the amount of crosslinker is less than the amount of chain transfer agent. According to an embodiment the weight percent of crosslinker is less than the weight percent of chain transfer agent. According to an embodiment the weight ratio of chain transfer agent to cross linker is in the range of 1:1 or 1.5:1 to 10:1. According to an embodiment, the mole percent of crosslinker is less than the mole percent of chain transfer agent. According to an embodiment the mole ratio of chain transfer agent to cross linker is at least 1.2:1 or 1.4:1 or 1.5:1 or 1.7:1 or 2:1 or 4:1. According to an embodiment the mole ratio of chain transfer agent to cross linker is less than 20:1 or 15:1 or 10:1.

The cross linker may be any polyfunctional unsaturated monomer - i.e. any monomer having two or more unsaturated groups available for addition polymerization. Examples of suitable bifunctional monomers include: ethylene glycol di(meth)acrylate, hexanediol di(meth)acrylate, tripropylene glycol di(meth)acrylate, butanediol di(meth)acrylate, neopentyl glycol di(meth)acrylate, diethylene glycol di(meth)acrylate, triethylene glycol di(meth)acrylate, dipropylene glycol di(meth)acrylate, allyl (meth)acrylate, divinyl benzene and derivatives thereof. Trifunctional examples include: tripropylene glycol tri(meth)acrylate, trimethylol propane tri(meth)acrylate, pentaerythritol tri(meth)acrylate. Tetrafunctional monomers such as pentaerythritol tetra(meth)acrylate and hexafunctional monomers, e.g. dipentaerythritol hexa(meth)acrylate may also be used. Optionally, the polyfunctional monomer may comprise a mixture of more than one polyfunctional compound. According to one embodiment the crosslinker is

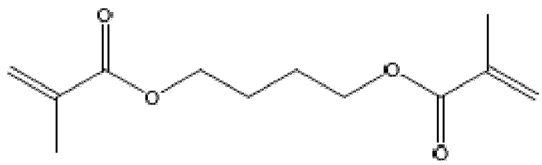

1, 4-butanediol dimethacrylate (BGDMA) .

The amount of crosslinker according to some embodiments is at least 0.1 or 0.5 or 1 weight percent based on total weight of the reactants. According to some embodiments the amount of cross linker is no more than 10 or 8 or 6 or 5 weight percent based on total weight of the reactants.

According to certain embodiments the cross linker is BGDMA and the chain transfer agent is BMA. According to an embodiment the acrylate monomer (e.g. methyl methacrylate) is present in amounts of from 90 to 99 weight percent, the amount of BGDMA is in the range of 1 or 2 to 4 or 3 weight percent and the amount of BMA is in the range of 1 or 2 or 3 to 7 or 6 weight percent based on total weight of acrylate monomer, BGDMA and BMA.

The branched polymer can be made using any free-radical polymerization method, e.g. solution, suspension, emulsion and bulk polymerization methods may all be used. For example, conventional emulsion polymerization may be used.

A surfactant or emulsifier may be used. Examples of emulsifiers include nonionic, anionic and cationic emulsifiers.

Suitable nonionic emulsifiers are araliphatic or aliphatic nonionic emulsifiers, examples being ethoxylated mono-, di-, and trialkylphenols (degree of ethoxylation: 3 to 50, alkyl radical: $C_4$-$C_{10}$), ethoxylates of long-chain alcohols (degree of ethoxylation: 3 to 100, alkyl radical: $C_8$-$C_{36}$), and also polyethylene oxide/polypropylene oxide homopolymers and copolymers. These may comprise the alkylene oxide units copolymerized in random distribution or in the form of blocks. Highly suitable are, for example, ethylene oxide/propylene oxide block copolymers. Preference is given to using ethoxylates of long-chain alkanols (alkyl radical $C_1$-$C_{30}$, average degree of ethoxylation 5 to 100) and, among these, particular preference to those having a linear $C_{12}$-$C_{20}$ alkyl radical and an average degree of ethoxylation of 10 to 50, and also ethoxylated monoalkylphenols.

Suitable anionic emulsifiers are, for example, alkali metal and ammonium salts of alkyl sulfates (alkyl radical: $C_8$-$C_{22}$), of sulfuric monoesters with ethoxylated alkanols (degree of ethoxylation: 2 to 50, alkyl radical: $C_{12}$-$C_{18}$) and with ethoxylated alkylphenols (degree of ethoxylation: 3 to 50, alkyl radical: $C_4$-$C_9$), of alkylsulfonic acids (alkyl radical: $C_{12}$-$C_{18}$) and of alkylarylsulfonic acids (alkyl radical: $C_9$-$C_{18}$). Further suitable emulsifiers are found in Houben-Weyl, Methoden der organischen Chemie, volume XIV/1, Makromolekulare Stoffe, Georg-Thieme-Verlag, Stuttgart, 1961, pp. 192-208. Also suitable as anionic emulsifiers are bis(phenylsulfonic acid) ethers and their alkali metal or ammonium salts which carry a $C_4$-$C_{24}$ alkyl group on one or both aromatic rings. These compounds are common knowledge, from U.S. Pat. No. 4,269,749, for example, and are available commercially, in the form for example of Dowfax™ 2A1 (Dow Chemical Company).

Suitable cationic emulsifiers are preferably quaternary ammonium halides, e.g., trimethylcetylammonium chloride, methyltrioctylammonium chloride, benzyltriethylammonium chloride or quaternary compounds of N-$C_6$-$C_{20}$-alkylpyridines, -morpholines or -imidazoles, e.g., N-laurylpyridinium chloride.

The amount of emulsifier (or surfactant) can be at least 0.01 or 0.1 weight percent to 10 or 5 weight percent, based on the amount of monomers to be polymerized.

Initiators may be used. Examples of initiators may be initiated by any suitable method of generating free-radicals such as by thermally induced decomposition of a thermal initiator such as an azo compound, peroxide or peroxyester. Therefore, the polymerization mixture also preferably contains a polymerization initiator which may be any of those known and conventionally used in free-radical polymerization reactions. Examples of azo initiators include azobis(isobutyronitrile) (AIBN), azobis(2-methylbutyronitrile), azobis(2,4-dimethylvaleronitrile), azobis(4-cyanovaleric acid). Examples of peroxide and peroxy initiators include hydrogen peroxide, sodium peroxide, potassium peroxide, t-butyl hydroperoxide, cumene hydroperoxide, dilauroyl peroxide, tert-butyl peroxyneodecanoate, dibenzoyl peroxide, cumyl peroxide, tert-butyl peroxy-2-ethyl hexanoate, tert-butyl peroxy diethyl acetate and tert-butyl peroxy benzoate. Examples of additional initiators include ammonium and/or alkali metal persulfates, sodium perborate, perphosphoric acid and salts thereof, potassium permanganate, and ammonium or alkali metal salts of peroxydisulfuric acid, examples being alkali metal or ammonium peroxydisulfates, diacetyl peroxide, dibenzoyl peroxide, succinyl peroxide, di-tert-butyl peroxide, tert-butyl perbenzoate, tert-butyl perpivalate, tort-butyl peroxy-2-ethylhexanoate, tert-butyl permaleinate, cumene hydroperoxide, diisopropyl peroxydicarbamate, bis(o-toluoyl)peroxide, didecanoyl peroxide, dioctanoyl peroxide, dilauroyl peroxide, tert-butyl perisobutyrate, tert-butyl peracetate, di-tert-amyl peroxide, tert-butyl hydroperoxide, azobisisobutyronitrile, 2,2'-azobis(2-amidino-propane)dihydrochloride or 2,2'-azobis(2-methylbutyronitrile). Also suitable are mixtures of these initiators. As initiators it is also possible to use reduction/oxidation (i.e., redox) initiator systems. The redox initiator systems are composed of at least one, usually inorganic, reducing agent and one organic or inorganic oxidizing agent. The oxidizing component comprises, for example, the emulsion polymerization initiators already specified above. The reducing component comprises, for example, alkali metal salts of sulfurous acid, such as sodium sulfite, sodium hydrogen sulfite, alkali metal salts of disulfurous acid such as sodium disulfite, bisulfite addition compounds of aliphatic aldehydes and ketones, such as acetone bisulfite or reducing agents such as hydroxymethanesulfinic acid and salts thereof, or ascorbic acid. The redox initiator systems can be used along with soluble metal compounds whose metallic component is able to occur in a plurality of valence states. Typical redox initiator systems are, for example, ascorbic acid/iron(II) sulfate/sodium peroxodisulfate, tert-butyl hydroperoxide/sodium disulfite, tert-butyl hydroperoxide/Na hydroxymethanesulfinate. The individual components, the reducing component for example, may also be mixtures, an example being a mixture of the sodium salt of hydroxymethanesulfinic acid and sodium disulfite.

The amount of initiator is generally at least 0.01 or 0.05 or 0.01 weight percent to 10 or 5 or 3 weight percent based

on all of the monomers to be polymerized.

The branched polymers are not cross-linked. For example, this can be demonstrated by evaluating the solubility of the polymers in a solvent such as tetrahydrofuran. A cross-linked polymer will not be soluble.

The branched polymers according to certain embodiments can be characterized by a polymer branching ratio, g', of less than 1, 0.95, 0.9, 0.8. According to some embodiments g' is at least 0.5 or 0.6 or 0.7. The polymer branching ratio (g') is calculated by comparing measured the intrinsic viscosity of the branched polymer ($[\eta]_{branched}$) at each elution volume increment to the intrinsic viscosity of the linear polymer ($[\eta]_{linear}$) with the same molecular weight (M) (Eq. 1) in gel permeation chromatography (GPC) analysis. For a linear polymer, g' value equals to 1 and, for a branched polymer, g' is smaller than 1.

$$g' = \left(\frac{[\eta]_{branched}}{[\eta]_{linear}}\right)_M \qquad \text{(Eq. 1)}$$

Molecular Weight Analysis: The polymer absolute molecular weights ($M_w$, $M_n$), PMMA-relative molecular weights ($M_{w_PMMA}$, $M_{n_PMMA}$), intrinsic viscosity ($[\eta]_w$, $[\eta]_n$), and branching ratio (g') can be measured by gel permeation chromatography with online multi-angle light scattering (MALS) detector, viscometer (VS), and differential refractive index (dRI) detector. For example, the GPC instrument setup can include an Agilent 1200 series HPLC system (degasser, pump, autosampler and column oven), a Wyatt HELEOS II MALS detector, a Wyatt ViscoStar II viscometer, and a Wyatt T-rEX dRI detector. The polymer separation can be carried out on a column set e.g. having two PLgel mixed B LS columns (10 μm particle size, 7.5 x 300 mm length) using tetrahydrofuran (THF) as the mobile phase at a flow rate of 1 mL/min. Column oven temperature is set at 30 °C. A set of 10 points PMMA standards (Agilent EasiCal PM-1) is used to calibrate the GPC columns and provide the PMMA-relative molecular weight. The absolute molecular weights are obtained from the MALS detection using Zimm formalism and the intrinsic viscosity data are obtained from the viscometer. High molecular weight fractions data (PMMA-relative molecular weight larger than 6500 Da) are used to calculate average g' values. For consistency of g' calculation, a linear PMMA model from Mark-Houwink equation (Eq. 2, where K = 0.0383 mL/g and $\alpha$ = 0.581 for non-BA containing samples in Table 2 and K = 0.03044 mL/g and $\alpha$ = 0.615 for BA containing polymers in Table 2) is used to obtain the ($[\eta]_{linear}$) in Eq. 1 using the M data from MALS detection.

$$[\eta] = KM^{\alpha} \qquad \text{(Eq. 2)}$$

The weight average molecular weight, $M_w$, as measured by GPC of the branched polymer is according to certain embodiments in the range of at least 8000 or 10,000 or 15,000 or 20,000 g/mol. According to certain embodiments weight average molecular weight is no more than 100,000 or 80,000 g/mol. The number average molecular weight, $M_n$, of the branched polymer as measured by GPC according to certain embodiments is at least 3000 or 4000 or 5000 g/mol. According to certain embodiments the number average molecular weight is no more than 50,000 or 40,000 or 30,000, or 20,000 g/mol.

According to certain embodiments the branched structure is a dendritic structure.

According to certain embodiments the amount of branched polymer in the composition is at least 1 or 3 or 5 or 10 weight percent. The composition may be in a concentrated form and then mixed with a flexible acrylic resin polymer to get to the desired amount of branched polymer in the composition that is being processed (e.g. extruded, injection molded). In concentrated form, the amount of branched polymer may comprise a significant portion of the composition, for example up to 60 or 50 or 40 weight percent. For use in processing, to get the benefits of higher melt flow index (lower viscosity), the composition may according to certain embodiments comprise the branched polymer in amounts up to 30 or 25 or 20 weight percent. The branched polymer is soluble (miscible) in the flexible acrylic resin in the amounts used as is demonstrated that the composition is transparent.

The composition may further comprise additional additives as are desired for the final product. Examples of such additives include UV light stabilizers and antioxidants. According to certain embodiments that additives are selected such that the composition remains transparent. Examples of UV light stabilizers include benzophenones, benzotriazoles, triazines, benzoxazinones, hindered amine light stabilizer (HALS) and hindered benzoates. Commercially available UV and light stabilizers are exemplified by Cyasorb Light Absorbers, and Light Stabilizers, and Cyasorb Cynergy Solutions from Solvay, TINUVIN FROM BASF, LowLite from Chemtura, OnCap from PolyOne, and Light Stabilizer 210 from E. I. du Pont de Nemours and Company of Delaware, U.S.A. Examples of antioxidants include phenolic antioxidants, and combinations of phenolic antioxidants with phosphites, thioethers or organic sulfides. Phenolic antioxidants include fully sterically hindered phenols and partially hindered phenols; and sterically hindered amines such as tetramethyl-piperidine derivatives. Suitable phenolic antioxidants include vitamin E and IRGANOX™ 1010 from BASF. IRGANOX™ 1010 comprises pentaerythritol tetrakis(3-(3,5-di-t-butyl-4-hydroxyphenyl)propionate). Additional examples of antioxidants are acetyl cysteine, arbutin, ascorbic acid, ascorbic acid polypeptide, ascorbyl dipalmitate, ascorbyl methylsilanol

pectinate, ascorbyl palmitate, ascorbyl stearate, BHA, p-hydroxyanisole, BHT, t-butyl hydroquinone, caffeic acid, Camellia sinensis oil, chitosan ascorbate, chitosan glycolate, chitosan salicylate, chlorogenic acids, cysteine, cysteine HCl, decyl mercaptomethylimidazole, erythorbic acid, diamylhydroquinone, di-t-butylhydroquinone, dicetyl thiodipropionate, dicyclopentadiene/t-butylcresol copolymer, digalloyl trioleate, dilauryl thiodipropionate, dimyristyl thiodipropionate, dioleyl tocopheryl methylsilanol, isoquercitrin, diosmine, disodium ascorbyl sulfate, disodium rutinyl disulfate, distearyl thiodipropionate, ditridecyl thiodipropionate, dodecyl gallate, ethyl ferulate, ferulic acid, hydroquinone, hydroxylamine HCl, hydroxylamine sulfate, isooctyl thioglycolate, kojic acid, madecassicoside, magnesium ascorbate, magnesium ascorbyl phosphate, melatonin, methoxy-PEG-7 rutinyl succinate, methylene di-t-butylcresol, methylsilanol ascorbate, nordihydroguaiaretic acid, octyl gallate, phenylthioglycolic acid, phloroglucinol, potassium ascorbyl tocopheryl phosphate, thiodiglycolamide, potassium sulfite, propyl gallate, rosmarinic acid, rutin, sodium ascorbate, sodium ascorbyl/cholesteryl phosphate, sodium bisulfite, sodium erythorbate, sodium metabisulfide, sodium sulfite, sodium thioglycolate, sorbityl furfural, tea tree (Melaleuca aftemifolia) oil, tocopheryl acetate, tetrahexyldecyl ascorbate, tetrahydrodiferuloylmethane, tocopheryl linoleate/oleate, thiodiglycol, tocopheryl succinate, thiodiglycolic acid, thioglycolic acid, thiolactic acid, thiosalicylic acid, thiotaurine, retinol, tocophereth-5, tocophereth-10, tocophereth-12, tocophereth-18, tocophereth-50, tocopherol, tocophersolan, tocopheryl linoleate, tocopheryl nicotinate, tocoquinone, o-tolyl biguanide, tris(nonylphenyl) phosphite, ubiquinone, zinc dibutyldithiocarbamate, and mixtures thereof. According to certain embodiments the total amount of additives used (if any) is less than 10 or 5 or 3 weight percent based on total weight of the composition.

The composition is characterized by melt flow index according to ASTM D1238 of at least 30, 40, 50, or 60 g/10 min, 220 °C, 10 kg. According to certain embodiments, the melt flow index is less than 100 or 90 g/10 min, 220 °C, 10 kg.

According to certain embodiments the composition is non-hazy. For example, a haze as measured by light transmission is less than 1% as measured according to ASTMD1003 using suitable instrument, e.g. BYKHazeGuard Plus.

The composition may be made by blending the components. According to one embodiment, the components can be cold blended (e.g. mix two aqueous latexes) and then freeze dried or coagulated. According to another embodiment the ingredients can be mixed in powder form.

The composition is useful in extruding, calendaring, and injection molding applications due to the favorable melt flow index.

According to an embodiment the composition is extruded is a thin film. The film can have a thickness of 150 or 125 or 100 microns or less. According to certain embodiments the thickness is at least 50 microns. According to an embodiment the composition is coextruded as a layer in a multi-layer film. The layer can have a thickness of 150 or 125 or 100 microns or less. According to certain embodiments the layer has a thickness of at least 10, 20, 30, or 50 microns. The film is transparent. The film does not show crease whitening.

EXAMPLES

Example 1 - Synthesis of branched polymer additive

The emulsion polymerization is carried out in a 5 liter 4-necked round bottom flask equipped with a mechanical stirrer, heating mantel, thermometer, temperature controller and N2 inlet. To the reactor is charged 1063 parts of deionized water, 6.01 parts of A18 alkyl sulfate surfactant (42% in water) and 0.091 parts of Fe-EDTA complex (as Sequestrene). The contents of the reactor were heated to 75 °C with an N2 sweep. A monomer emulsion is prepared in a separate container with 238.5 parts of deionized water, 24.04 parts of A18 alkyl sulfate surfactant (42% in water), 50 parts of butyl acrylate (BA), 875 parts of methyl methacrylate (MMA), 50 parts of butyl 3-mercaptopropioante (BMP) and 25 parts of 1,4 butanediol dimethacrylate (BGDMA). Mechanical agitation is applied to effect emulsification. The redox initiator system consists of 2 separate solutions. The first is a 2% (by weight) solution of t-butyl hydroperoxide (t-BHP) in water (oxidant) and the second is a 2% (by weight) solution of sodium formaldehyde sulfoxyate (SFS) in water (reductant), both 80 parts total. 94.69 parts of the monomer emulsion were added to the reactor vessel and after 1 minute (time zero) simultaneous feeds of the t-BHP and SFS solutions were started at 0.89 parts/minute (both 90 minute feed times). The reactor temperature is maintained at 75 °C for the entire polymerization process. After 15 minutes the rest of the monomer emulsion is fed at 19.46 parts/minute (60 minute feed time). At the end of the monomer feed (total reaction time 75 minutes from time zero) the t-BHP and SFS continued for another 15 minutes (total reaction time 90 minutes from time zero). The reaction is then cooled to 40 °C and filtered through cheesecloth. The emulsion particle size of a polymer made by this method was measured to be 124 nm (by light scattering), the solids content was 39.9% (by gravimetry) and the residual BA and MMA monomers were 27 and 98 ppm respectively (by headspace gas chromatography). Some of the latex is then freeze dried to a powder using dry ice and then a vacuum oven.

Example 2 - Cold blends

Cold blends (i.e. mixing of additive in aqueous solution with aqueous solution of multistage flexible acrylic resin)

of various additive polymers were made with Paraloid™ 21308XP multistage flexible acrylic resin (FAR). The relative amounts of methyl methacrylate monomer, chain transfer agent (BMP) and cross-linker (BGDMA) are shown in Table 1. Milled films were made having 250 micron thickness. The samples were tested for haze, crease whitening and melt flow index as described above. In addition, the molecular weights by GPC-MALS, by GPC-VS, and by CC-PMMA as described above of the additives as used in the blends described in Table 1 are shown in Table 2.

Table 1

| Sample ID | Additive ID | wt% of additive in Blend w/ FAR | Monomers used in forming additive (wt%) | | | Haze | Crease Whiten | Notes | MFI, g/10 min, 220 °C/10 kg |
|---|---|---|---|---|---|---|---|---|---|
| | | | MMA | BMP | BGDMA | | | | |
| Comparative A | A5 | 15 | 95 | 5 | 0 | NO | YES | Linear Low MW Control $M_n$ ~3.2K | 75 |
| Example 2a | A1 | 15 | 94 | 5 | 1 | NO | NO | Additives are branched, low MW, and NOT cross-linked. 100% soluble in THF. | 79 |
| Example 2b | A2 | 15 | 93 | 5 | 2 | NO | NO | | 74 |
| Example 2c | A3 | 15 | 92 | 5 | 3 | NO | NO | | 61 |
| Comparative B | A4 | 15 | 100 | 0 | 0 | YES | YES | Linear High MW Control >100K | 6 |
| Comparative C | NA | 0 | NA | NA | NA | NO | NO | Control - no additive | 16 |
| Example 2d | A6 | 15 | 95 | 5 | 1 | NO | NO | Additives are branched, low MW, and NOT cross-linked. 100% soluble in THF. | 72 |
| Example 2e | A7 | 15 | 96.5 | 2.5 | 1 | NO | NO | | 61 |
| Example 2f | A8 | 15 | 97 | 2.5 | 0.5 | NO | NO | | 63 |
| Example 2g | A9 | 15 | 94.5 | 5 | 0.5 | NO | NO | | 93 |
| Comparative D | A10 | 15 | 97.5 | 2.5 | 0 | NO | Slight | Linear Low MW Control $M_n$ ~6.5K | 65 |

Table 2

| Additive Sample ID | Additive Monomers by wt.% | | | | GPC-MALS | | GPC-VS | | | | CC-PMMA | | Average g' |
|---|---|---|---|---|---|---|---|---|---|---|---|---|---|
| | MMA | BA | BMP | BGDMA | Mw, kDa | Mn, kDa | Rh,w, nm | Rh,n, nm | [η]w (mL/g) | [η]n (mL/g) | Mw_PMMA, kDa | Mn_PMMA, kDa | |
| **A1** | 94 | 0 | 5 | 1 | 10.7 | 6 | 2.2 | 1.7 | 7.37 | 5.67 | 9.1 | 4 | 0.91 |
| **A2** | 93 | 0 | 5 | 2 | 15.8 | 7.9 | 2.5 | 1.9 | 8.11 | 6.27 | 11.6 | 4.2 | 0.84 |
| **A3** | 92 | 0 | 5 | 3 | 28.8 | 12.6 | 3.1 | 2.35 | 9.19 | 7.01 | 15.9 | 4.4 | 0.68 |
| **A4** | 100 | 0 | 0 | 0 | 225.6 | 153. 1 | 12.1 | 10 | 56.53 | 44.31 | 160 | 15.7 | 1.21 |
| **A5 (comparative)** | 95 | 0 | 5 | 0 | 7.3 | 4.6 | 1.9 | 1.55 | 7.12 | 5.75 | 7.2 | 3.6 | 1.07 |
| **A6** | 95 | 0 | 5 | 1 | 9.4 | 5.5 | 2.1 | 1.6 | 6.8 | 5.46 | 8.8 | 4 | 0.95 |
| **A7** | 96.5 | 0 | 2.5 | 1 | 22.4 | 12.2 | 3.2 | 2.45 | 11.22 | 8.41 | 18.7 | 7.5 | 0.93 |
| **A8** | 97 | 0 | 2.5 | 0.5 | 17.7 | 10.2 | 2.9 | 2.25 | 10.59 | 8.01 | 16.2 | 7.4 | 1.00 |
| **A9** | 94.5 | 0 | 5 | 0.5 | 8.7 | 5.2 | 2 | 1.6 | 7.02 | 5.51 | 8.2 | 4 | 0.98 |
| **A10 (comparative)** | 97.5 | 0 | 2.5 | 0 | 15.1 | 9.5 | 2.8 | 2.15 | 9.67 | 7.47 | 14.7 | 7 | 1.00 |
| **A11** | 87.5 | 5 | 5 | 2.5 | 28 | 5.1 | 2.6 | 1.6 | 8.2 | 5.3 | 16.8 | 4 | 0.78 |
| **A12 (comparative)** | 90 | 5 | 5 | 0 | 6.6 | 3.6 | 1.9 | 1.5 | 6.9 | 5 | 6.8 | 3.4 | 1.02 |

Example 3 - Powder blends

Powders of additives that were made and them freeze dried were blended with powder of Paraloid™ 21308XP. Milled films were made using lab two roll mill (Collin GmbH, Gewerbestrasse, Germany), at 185°C. The composition is as shown in Table 3. The films were tested for Haze and Crease whitening and the resin was tested for MFI as indicated above. None of the samples showed Haze great than 2%.

Table 3

| Sample ID | Additive ID | wt% of additive in Blend w/ FAR | Monomers used in forming additive (wt%) | | | Crease Whiten | Notes | MFI, g/10 min, 220 °C/10 kg |
|---|---|---|---|---|---|---|---|---|
| | | | MMA | BMP | BGDMA | | | |
| Comparative E | NA | 0 | NA | NA | NA | NO | Control 100% FAR | 16 |
| Example 3a | A6 | 15 | 95 | 5 | 1 | NO | Branched , low MW, not cross-linked. 100% THF soluble. 15% Loading | 72 |
| Example 3a | A7 | | 96.5 | 2.5 | 1 | NO | | 61 |
| Example 3a | A8 | | 97 | 2.5 | 0.5 | NO | | 63 |
| Example 3a | A9 | | 94.5 | 5 | 0.5 | NO | | 93 |
| Comparative F | A10 | | 97.5 | 2.5 | 0 | Slight | Linear Low MW Control | 65 |
| Example 3a | A6 | 7.5 | 95 | 5 | 1 | NO | Factorial DOE Points. All 100% THF soluble. 7.5% Loading | 50 |
| Example 3a | A7 | | 96.5 | 2.5 | 1 | | | 40 |
| Example 3a | A8 | | 97 | 2.5 | 0.5 | | | 41 |
| Example 3a | A9 | | 94.5 | 5 | 0.5 | | | 49 |
| Comparative G | A10 | | 97.5 | 2.5 | 0 | Very Slight | Linear Low MW Control | 44 |

Example 4 - Film extrusion

Compositions comprising the Paraloid™ 21308XP from The Dow Chemical Company and the additive as set forth in Table 4 (at additive loading of 15%) were extruded through a T ("coat hanger") die. The results are shown in Table 4 where the film thickness in mils and/or quality is shown for varying RPM (15 or 20) of the extruder and rate of extrusion in feet/min (e.g. 5.0, 4.5, 4.0, 3.0). MFI is in g/10 minutes, 220 °C, 10 kg.

Table 4

| Additive ID | MFI | Melt pressure @15 RPM | Melt pressure @20 RPM | 15 RPM | | | | 20 RPM | | |
|---|---|---|---|---|---|---|---|---|---|---|
| | | | | 5.0 | 4.5 | 4.0 | 3.0 | 5.0 | 4.5 | 4.0 |
| A6 | 73.79 | | 480 psi | uneven | 3- 12 mil | 5 to 10 mil | 8-10 mil | 5 -11 mil | 7-10 mil | -- |
| A2 | 69.03 | 470 psi | 480 psi | Visible surge | Visible surge | Up to 14 mil (uneven) | 5-11 mil | 2 -15 mil (uneven) | 4 - 17 mil | 5-12 mil |
| A7 | 47.32 | 530 psi | 550 psi | Visible surge | Visible surge | 2- 18 mil (uneven) | 8 -12 mil | 2.5- 17 mil (uneven) | 5 -10 mil | 7 -10 mil |

(continued)

| Additive ID | MFI | Melt pressure @15 RPM | Melt pressure @20 RPM | 15 RPM | | | | 20 RPM | | |
|---|---|---|---|---|---|---|---|---|---|---|
| | | | | 5.0 | 4.5 | 4.0 | 3.0 | 5.0 | 4.5 | 4.0 |
| A9 | 74.59 | 490 psi | 510 psi | Visible surge | 1- 18 mil (uneven) | 2- 15 mil (uneven) | 9-11 mil | 4 -16 mil (uneven) | 5-10 mil | -- |

Example 5 - spiral flow

Samples of Paraloid 21308XP with and without additive A6 at a loading of 15 weight percent additive were tested for spiral flow results using AUBURG injection molding machine (Arthur-Hehl-Straße, Germany). As shown in Table 5, the inventive Example 5 showed better (longer) flow distance and was able to be processed at a wider temperature range.

Table 5

| Additive ID | 85F mold temp /500 psi | 115F mold temp /500 psi | 115F mold temp/1000 psi | 140F mold/1000 psi |
|---|---|---|---|---|
| None (Control) | 11.5 inch | 11.5 inch | 19.5 inch | n/a (Too sticky) |
| Example 5 | 15.5 inch | 15.75 inch | 25.75 inch | 26.25 inch |

Example 6

Compositions comprising Paraloid™ 21308XP from The Dow Chemical Company and the additive as set forth in Table 6 (at additive loading of 15 weight percent) were extruded through a T ("coat hanger") die at varying RPM (15 or 20) and extrusion rates (e.g. 5.0, 4.5, 4.0) in ft/min. MFI is in g/10 minutes, 220 °C, 10 kg. The resulting film thickness is shown in Table 6 and film tensile properties measured according to ASTM D882 (rate 5 in/min) are shown in Table 7. As shown the linear additive led to surging at rates of 5 (ft/min) and 4.5 (ft/min) while the tensile properties are better using the branched additive.

Table 6

| Additive ID | MFI | Melt pressure @15 RPM | Melt pressure @20 RPM | 15 RPM | | | 20 RPM | | |
|---|---|---|---|---|---|---|---|---|---|
| | | | | 5.0 | 4.5 | 4.0 | 5.0 | 4.5 | 4.0 |
| A11 | 83 | 420 psi | 510 psi | 4-8 mil | 6-8 mil | 7-9 mil | 6-8 mil | 7-8 mil | 7-8 mil |
| A12 | 86 | 510 psi | 540 psi | 2 - 14 mil (visible surge) | 3 - 14 mil (visible surge) | 8-9 mil | 6-8 mil | 7 - 9 mil | 11 - 12 mil |

Table 7

| | Break elongation (%) | Break stress (psi) | Modulus (psi) | Thickness (mm) |
|---|---|---|---|---|
| A11 | 220 | 2306 | 28600 | 0.21 |
| A12 | 214 | 2131 | 20522 | 0.20 |

Example 7

Powders of additives that were made and freeze dried were blended with powder of PVC (clear PVC master batch formulation) and Paraloid™ 21308XP, or pellets PMMA (Plexiglas 7H) and Paraloid™ 21308XP. The blended resin was processed into thin film using a lab two roll mill. The composition is as shown in Table 8. The films were tested for light transmission (TT%) and Haze (H%). TT means total transmission as measured by BYKHazeGuard Plus. H means haze

(light scattering) as measured by BYKHazeGuard Plus), both according to ASTM D1003.

Table 8

| Formulation | TT (%) | H (%) | Film Thickness (mm) |
|---|---|---|---|
| PMMA 7H + 20% 21308XP | 91.1 | 16.4 | 160 |
| PMMA 7H + 20% 21308XP+15% A11 | 90.8 | 4.9 | 225 |
| PVCMB + 20% 21308XP | 84.6 | 15.9 | 200 |
| PVCMB + 20% 21308XP+15% A11 | 87.9 | 7.3 | 185 |

## Claims

**1.** A composition comprising:

a multi-stage flexible acrylic resin; and
a branched polymer which is a reaction product of reactants comprising one or more monoethylenically unsaturated ester monomers, a chain transfer agent in an amount of 0.1 to 10 weight percent, and a crosslinker in an amount of 0.1 to 10 weight percent of a crosslinker, wherein weight percent is based on total amount of reactants, provided the amount of crosslinker in moles is less than the amount of chain transfer agent in moles;
wherein said branched polymer is **characterized by** a polymer branching ratio, g', of less than 1;
and wherein $g' = \left(\frac{[\eta]_{branched}}{[\eta]_{linear}}\right)_M$ measured by gel permeation chromatography with online multi-angle light scattering (MALS) detector, viscometer (VS), and differential refractive index (dRI) detector.

**2.** The composition of claim 1 wherein the branched polymer is not cross-linked.

**3.** The composition of claim 1 or 2 wherein the one or more monoethylenically unsaturated ester monomers has the structure R'-C(O)O-R where R is a hydrocarbyl group of 1 to 12 carbon atoms and R' is a monoethylenically unsaturated aliphatic group having at least 2 or 3 carbon atoms.

**4.** The composition of any of the preceding claims wherein the chain transfer agent is selected from the group consisting of propyl mercaptan, butyl mercaptan, hexyl mercaptan, octyl mercaptan, dodecyl mercaptan, thioglycolic acid, mercaptopropionic acid, alkyl thioglycollates, mercaptoethanol, mercaptoundecanoic acid, thiolactic acid, thiobutyric acid, trimethylol propane tris(3-mercaptopropionate), pentaerythritol tetra(3-mercaptopropionate), pentaerythritol tetrathioglycollate, pentaerythritol tetrathiolactate, pentaerythritol tetrathiobutyrate; dipentaerythritol hexa(3-mercaptopropionate), dipentaerythritol hexathioglycollate; tripentaerythritol octa(3-mercaptopropionate), tripentaerythritol octathioglycollate, butyl 3-mercaptopropioante and combinations of two or more thereof.

**5.** The composition of any of the preceding claims wherein the cross-linker is selected from the group consisting of ethylene glycol di(meth)acrylate, hexanediol di(meth)acrylate, tripropylene glycol di(meth)acrylate, butanediol di(meth)acrylate, neopentyl glycol di(meth)acrylate, diethylene glycol di(meth)acrylate, triethylene glycol di(meth) acrylate, dipropylene glycol di(meth)acrylate, allyl (meth)acrylate, divinyl benzene and derivatives thereof, tripropylene glycol tri(meth)acrylate, trimethylol propane tri(meth)acrylate, pentaerythritol tri(meth)acrylate, pentaerythritol tetra(meth)acrylate dipentaerythritol hexa(meth)acrylate, 1,4 butanediol dimethacrylate, and combinations of two or more thereof.

**6.** The composition of any of the preceding claims wherein the amount of cross-linker is from 0.5 to 4 weight percent.

**7.** The composition of any of the preceding claims wherein the amount of chain transfer agent is from 1 to 5 weight percent.

**8.** The composition of any of the preceding claims wherein the multi-stage flexible acrylic resin is multi-stage sequential polymer composition comprising a first stage crosslinked acrylic polymer composition which forms a core, one or more intermediate layer acrylic polymer compositions, and an outer layer acrylic polymer composition wherein the core and

the intermediate layer(s) and outer layer differ in one or more of the following respects: being derived from different acrylate monomers, degree of cross linking (intermediate and out layers may or may not be cross linked), and glass transition temperature.

9. The composition of any of the preceding claims wherein the branched polymer is **characterized by** a g' of no more than 0.9.

10. The composition of any of the preceding claims comprising 50 to 99 weight percent of the multi-stage flexible acrylic resin and 1 to 50 weight percent of the branched polymer based on total weight of the composition.

11. The composition of claim 10 comprising 75 to 95 weight percent of the multi-stage flexible acrylic resin and 5 to 25 weight percent of the branched polymer based on total weight of the composition.

12. The composition of any one of the preceding claims having a melt flow index of at least 40 g/10 minutes, 220 °C, 10 kg.

13. The composition of any of the preceding claims further comprising a polymer selected from acrylate polymers, polyesters, polycarbonates, polyamides, and halogenated polyolefins having at least 20 weight percent halogen.

14. An extruded film comprising a layer of the composition of any one of claims 1-13.

15. The film of claim 14 having a thickness of no more than 150 microns.

**Patentansprüche**

1. Zusammensetzung, umfassend:

ein mehrstufiges flexibles Acrylharz; und
ein verzweigtes Polymer, das ein Reaktionsprodukt von Reaktanten ist, umfassend ein oder mehrere monoethylenisch ungesättigte Estermonomere, ein Kettenübertragungsmittel in einer Menge von 0,1 bis 10 Gewichtsprozent und einen Vernetzer in einer Menge von 0,1 bis 10 Gewichtsprozent eines Vernetzers, wobei Gewichtsprozent auf einer Gesamtmenge von Reaktanten basiert, vorausgesetzt, dass die Menge des Vernetzers in Mol weniger als die Menge des Kettenübertragungsmittels in Mol beträgt;
wobei das verzweigte Polymer **gekennzeichnet ist durch** ein Polymerverzweigungsverhältnis g' von weniger als 1;
und wobei $g' = \left(\frac{[\eta]_{verzweigt}}{[\eta]_{linear}}\right)_M$, gemessen durch Gelpermeationschromatographie mit Online-Mehrwinkel-Lichtstreuungsdetektor (MALS), Viskosimeter (VS) und Differenzialbrechungsindexdetektor (dRI).

2. Zusammensetzung nach Anspruch 1 wobei das verzweigte Polymer nicht vernetzt ist.

3. Zusammensetzung nach Anspruch 1 oder 2, wobei das eine oder die mehreren monoethylenisch ungesättigten Estermonomere die Struktur R'-C(O)O-R aufweist, wobei R eine Hydrocarbylgruppe mit 1 bis 12 Kohlenstoffatomen und R' eine monoethylenisch ungesättigte aliphatische Gruppe ist, die mindestens 2 oder 3 Kohlenstoffatome aufweist.

4. Zusammensetzung nach einem der vorstehenden Ansprüche, wobei das Kettenübertragungsmittel aus der Gruppe ausgewählt ist, bestehend aus Propylmercaptan, Butylmercaptan, Hexylmercaptan, Octylmercaptan, Dodecylmercaptan, Thioglykolsäure, Mercaptopropionsäure, Alkylthioglykolaten, Mercaptoethanol, Mercaptoundecansäure, Thiomilchsäure, Thiobuttersäure, Trimethylolpropantris(3-mercaptopropionat), Pentaerythritoltetra(3-mercaptopropionat), Pentaerythritoltetrathioglykolat, Pentaerythritoltetrathiolactat, Pentaerythritoltetrathiobutyrat; Dipentaerythritolhexa(3-mercaptopropionat), Dipentaerythritolhexathioglykolat; Tripentaerythritolocta(3-mercaptopropionat), Tripentaerythritoloctathioglykolat, Butyl-3-mercaptopropioant und Kombinationen von zwei oder mehr davon.

5. Zusammensetzung nach einem der vorstehenden Ansprüche, wobei der Vernetzer ausgewählt ist aus der Gruppe bestehend aus Ethylenglykoldi(meth)acrylat, Hexandioldi(meth)acrylat, Tripropylenglykoldi(meth)acrylat, Butandioldi(meth)acrylat, Neopentylglykoldi(meth)acrylat, Diethylenglycoldi(meth)acrylat, Triethylenglykoldi(meth)acrylat, Dipropylenglykoldi(meth)acrylat, Allyl(meth)acrylat, Divinylbenzol und Derivate davon, Tripropylenglykoltri(meth) acrylat, Trimethylolpropantri(meth)acrylat, Pentaerythritoltri(meth)acrylat, Pentaerythritoltetra(meth)acrylat-Dipentaerythritolhexa(meth)acrylat, 1,4-Butandioldimethacrylat und Kombinationen von zwei oder mehr davon.

**6.** Zusammensetzung nach einem der vorstehenden Ansprüche, wobei die Menge des Vernetzers von 0,5 bis 4 Gewichtsprozent beträgt.

**7.** Zusammensetzung nach einem der vorstehenden Ansprüche, wobei die Menge des Kettenübertragungsmittels von 1 bis 5 Gewichtsprozent beträgt.

**8.** Zusammensetzung nach einem der vorstehenden Ansprüche, wobei das mehrstufige flexible Acrylharz eine mehrstufige sequenzielle Polymerzusammensetzung ist, umfassend eine vernetzte Acrylpolymerzusammensetzung erster Stufe, die einen Kern, eine oder mehrere Zwischenschichtacrylpolymerzusammensetzungen und eine Außenschichtacrylpolymerzusammensetzung, bildet, wobei sich der Kern und die Zwischenschicht(en) und die Außenschicht in einem oder mehreren der folgenden Aspekte unterscheiden: einem Abgeleitetsein von unterschiedlichen Acrylatmonomeren, einem Grad der Vernetzung (Zwischen- und Außenschichten können vernetzt sein, müssen es aber nicht) und einer Glasübergangstemperatur.

**9.** Zusammensetzung nach einem der vorstehenden Ansprüche, wobei das verzweigte Polymer **gekennzeichnet ist durch** ein g' von nicht mehr als 0,9.

**10.** Zusammensetzung nach einem der vorstehenden Ansprüche, umfassend zu 50 bis 99 Gewichtsprozent das mehrstufige flexible Acrylharz und zu 1 bis 50 Gewichtsprozent das verzweigte Polymer basierend auf einem Gesamtgewicht der Zusammensetzung.

**11.** Zusammensetzung nach Anspruch 10, umfassend zu 75 bis 95 Gewichtsprozent das mehrstufige flexible Acrylharz und zu 5 bis 25 Gewichtsprozent das verzweigte Polymer basierend auf einem Gesamtgewicht der Zusammensetzung.

**12.** Zusammensetzung nach einem der vorstehenden Ansprüche mit einem Schmelzflussindex von mindestens 40 g/10 Minuten, 220 °C, 10 kg.

**13.** Zusammensetzung nach einem der vorstehenden Ansprüche, ferner umfassend ein Polymer, das aus Acrylatpolymeren, Polyestern, Polycarbonaten, Polyamiden und halogenierten Polyolefinen mit mindestens 20 Gewichtsprozent Halogen ausgewählt ist.

**14.** Extrudierte Folie, umfassend eine Schicht der Zusammensetzung nach einem der Ansprüche 1 bis 13.

**15.** Folie nach Anspruch 14, die eine Dicke von nicht mehr als 150 Mikrometern aufweist.

## Revendications

**1.** Composition comprenant :

une résine acrylique souple à plusieurs étages ; et
un polymère ramifié qui est un produit de réaction de réactifs comprenant un ou plusieurs monomères d'ester à insaturation monoéthylénique, un agent de transfert de chaîne en une quantité de 0,1 à 10 pour cent en poids, et un agent de réticulation en une quantité de 0,1 à 10 pour cent en poids d'un agent de réticulation, dans laquelle le pourcentage en poids est basé sur la quantité totale de réactifs, à condition que la quantité d'agent de réticulation en moles soit inférieure à la quantité d'agent de transfert de chaîne en moles ;
dans laquelle ledit polymère ramifié est **caractérisé par** un rapport de ramification de polymère, g', inférieur à 1 ;
et dans laquelle $g' = \left(\frac{[\eta]_{ramifié}}{[\eta]_{linéaire}}\right)_M$ mesuré par chromatographie par perméation de gel avec un détecteur de diffusion de lumière multi-angle (MALS) en ligne, un viscosimètre (VS), et un détecteur d'indice de réfraction différentiel (dRI).

2. Composition selon la revendication 1, dans laquelle le polymère ramifié n'est pas réticulé.

3. Composition selon la revendication 1 ou 2, dans laquelle le ou les monomères d'ester à insaturation monoéthylénique ont la structure R'-C(O)O-R où R est un groupe hydrocarbyle de 1 à 12 atomes de carbone et R' est un groupe aliphatique à insaturation monoéthylénique ayant au moins 2 ou 3 atomes de carbone.

4. Composition selon l'une quelconque des revendications précédentes, dans laquelle l'agent de transfert de chaîne est choisi dans le groupe constitué de propylmercaptan, butyl-mercaptan, hexyl-mercaptan, octyl-mercaptan, dodécyl-mercaptan, acide thioglycolique, acide mercaptopropionique, thioglycolates d'alkyle, mercaptoéthanol, acide mercapto-undécanoïque, acide thiolactique, acide thiobutyrique, tris(3-mercaptopropionate) de triméthylolpropane, tétra(3-mercaptopropionate) de pentaérythritol, tétrathioglycolate de pentaérythritol, tétrathiolactate de pentaérythritol, tétrathiobutyrate de pentaérythritol ;
hexa(3-mercaptopropionate) de dipentaérythritol, hexathioglycolate de dipentaérythritol ; octa(3-mercaptopropionate) de tripentaérythritol, octathioglycolate de tripentaérythritol, 3-mercaptopropionate de butyle et des combinaisons de deux de ceux-ci ou plus.

5. Composition selon l'une quelconque des revendications précédentes, dans laquelle l'agent de réticulation est choisi dans le groupe constitué de di(méth)acrylate d'éthylène glycol, di(méth)acrylate d'hexanediol, di(méth)acrylate de tripropylène glycol, di(méth)acrylate de butanediol, di(méth)acrylate de néopentyl glycol, di(méth)acrylate de diéthylène glycol, di(méth)acrylate de triéthylène glycol, di(méth)acrylate de dipropylène glycol, (méth)acrylate d'allyle, divinylbenzène et dérivés de celui-ci, tri(méth)acrylate de tripropylène glycol, tri(méth)acrylate de triméthylol-propane, tri(méth)acrylate de pentaérythritol, tétra(méth)acrylate de pentaérythritol, hexa(méth)acrylate de dipentaérythritol, diméthacrylate de 1,4 butanediol, et des combinaisons de deux de ceux-ci ou plus.

6. Composition selon l'une quelconque des revendications précédentes, dans laquelle la quantité d'agent de réticulation va de 0,5 à 4 pour cent en poids.

7. Composition selon l'une quelconque des revendications précédentes, dans laquelle la quantité d'agent de transfert de chaîne va de 1 à 5 pour cent en poids.

8. Composition selon l'une quelconque des revendications précédentes, dans laquelle la résine acrylique souple à plusieurs étages est une composition de polymère séquentielle à plusieurs étages comprenant une composition de polymère acrylique réticulé de premier étage qui forme un noyau, une ou plusieurs compositions de polymère acrylique de couche intermédiaire, et une composition de polymère acrylique de couche externe, dans laquelle le noyau et la(les) couche(s) intermédiaire(s) et la couche externe diffèrent par un ou plusieurs des aspects suivants : le fait d'être issus de monomères d'acrylate différents, le degré de réticulation (les couches intermédiaires et externe peuvent être ou non réticulées), et la température de transition vitreuse.

9. Composition selon l'une quelconque des revendications précédentes, dans laquelle le polymère ramifié est **caractérisé par** un g' non supérieur à 0,9.

10. Composition selon l'une quelconque des revendications précédentes, comprenant 50 à 99 pour cent en poids de la résine acrylique souple à plusieurs étages et 1 à 50 pour cent en poids du polymère ramifié sur la base du poids total de la composition.

11. Composition selon la revendication 10, comprenant 75 à 95 pour cent en poids de la résine acrylique souple à plusieurs étages et 5 à 25 pour cent en poids du polymère ramifié sur la base du poids total de la composition.

12. Composition selon l'une quelconque des revendications précédentes, ayant un indice d'écoulement à l'état fondu d'au moins 40 g/10 minutes, 220 °C, 10 kg.

13. Composition selon l'une quelconque des revendications précédentes, comprenant en outre un polymère choisi parmi des polymères d'acrylate, polyesters, polycarbonates, polyamides, et polyoléfines halogénées ayant au moins 20 pour cent en poids d'halogène.

14. Film extrudé comprenant une couche de la composition selon l'une quelconque des revendications 1 à 13.

15. Film selon la revendication 14, ayant une épaisseur non supérieure à 150 micromètres.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 10040915 B
- WO 9804603 A
- US 4269749 A


### Non-patent literature cited in the description


- *Bulletin of the American Physical Society*, 1956, vol. 1 (3), 123
- Polymer Handbook. Interscience Publishers, 1966